(19) Europäisches Patentamt
European Patent Office
Office européen des brevets

(11) **EP 3 341 752 B1**

(12) **EUROPEAN PATENT SPECIFICATION**

(45) Date of publication and mention
of the grant of the patent:
**08.03.2023 Bulletin 2023/10**

(21) Application number: **16753424.7**

(22) Date of filing: **10.08.2016**

(51) International Patent Classification (IPC):
**G01S 13/90** *(2006.01)*    **G01S 13/86** *(2006.01)*

(52) Cooperative Patent Classification (CPC):
**G01S 13/867; G01S 13/90; G06F 18/25;**
**G06V 20/64;** G01S 13/9064

(86) International application number:
**PCT/GB2016/052488**

(87) International publication number:
**WO 2017/032977 (02.03.2017 Gazette 2017/09)**

(54) **VIDEO-ASSISTED INVERSE SYNTHETIC APERTURE RADAR (VAISAR)**

VIDEOUNTERSTÜTZTER RADAR MIT INVERSER SYNTHETISCHER APERTUR (VAISAR)

RADAR À OUVERTURE SYNTHÉTIQUE INVERSE VIDÉO-ASSISTÉ (VAISAR)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.08.2015 GB 201514988**

(43) Date of publication of application:
**04.07.2018 Bulletin 2018/27**

(73) Proprietor: **Thales Holdings UK Plc**
**Reading, Berkshire RG2 6GF (GB)**

(72) Inventors:
• **NEWMAN, Mike**
  **Reading**
  **Berkshire RG2 0SB (GB)**
• **DONÀ, Gabriele**
  **10146 Torino (IT)**
• **HOND, Darryl**
  **Reading**
  **Berkshire RG2 0SB (GB)**

(74) Representative: **Marks & Clerk LLP**
**15 Fetter Lane**
**London EC4A 1BW (GB)**

(56) References cited:
DE-A1-102010 051 207

• ZHURAVLEV ANDREY ET AL: "Inverse synthetic aperture radar imaging for concealed object detection on a naturally walking person", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9074, 29 May 2014 (2014-05-29), pages 907402-907402, XP060036844, DOI: 10.1117/12.2051615 ISBN: 978-1-62841-730-2
• ZHURAVLEV A ET AL: "ISAR for concealed objects imaging", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9401, 12 March 2015 (2015-03-12), pages 94010I-94010I, XP060046427, DOI: 10.1117/12.2081761 ISBN: 978-1-62841-730-2

**Description**

FIELD OF THE INVENTION

Embodiments of the invention relate generally to a device and method for the formation of synthetic aperture radar images.

BACKGROUND

It is often necessary to determine what cargo a boat or other vehicle is carrying, for instance, to prevent illegal smuggling. Whilst in some cases this may be achieved through boarding the boat, this may not be possible for a variety of practical and legal reasons. From afar, optical sensors are limited in that they cannot see inside boats. Radar can potentially see within boats; however, it is often difficult to separate the radar return from cargo from that of the boat itself.

Synthetic aperture radar (SAR) is a method which creates images from radar scans of an object. A moving antenna is used to take radar measurements from varying positions relative to the object being imaged (the target). By combining recordings from multiple radar antenna positions, an image can be formed using a "synthetic aperture" which is much larger than the actual aperture of the antenna. This provides finer spatial resolution than would have been otherwise possible with the given antenna and therefore facilitates more accurate interpretation of the resulting imagery.

The nature of SAR is such that an accurate knowledge of the trajectory of the antenna relative to the target (or vice versa) is required. SAR imaging is very effective for radar imaging of static targets; however, it is not effective when the uncertainty in the relative motion of the radar and target is too large.

Inverse synthetic aperture radar (ISAR) is a method of SAR wherein, the target is moved instead of, or in addition to, the antenna. More importantly, since it is the relative motion of the target and the antenna that is important, the term ISAR generally refers to processing where this relative motion is unknown and must be inferred from radar measurements.

Conventional ISAR techniques are unable to make a complete determination of this unknown motion, limiting the imaging capability. Specifically, images produced using conventional ISAR have unknown scaling and orientation. This limits their interpretability. In particular, a sequence of ISAR images cannot be combined reliably to exploit the extra information available by looking at the target from multiple aspect angles. Moreover, ISAR images cannot easily be compared with optical images.

The requirement for precise knowledge of the target's motion relative to the antenna poses problems when imaging moving targets over which the user has no control, such as boats or ships. Accordingly, there is a need for a means of forming synthetic aperture images for situations where the motion of the target is not known.

In the present application ISAR is used to refer to any SAR where the motion of the object is unknown.

Andrey Zhuravlev et al.: "Inverse synthetic aperture radar imaging for concealed object detection on a naturally walking person" describes a system that uses the principle of inverse synthesis wherein the system consists of a 3D sensor and a distributed system of transmitters and receivers.

DE 10 2010 051207 A1 describes a system for three-dimensional imaging of an object moving relative to a sensor arrangement of the device, in which the object is detected by one or more radar sensors of the sensor arrangement and a three-dimensional radar image of the object is generated from radar data of the radar sensors. This system requires a 3D optical sensor to create a 3D surface model of the object.

Andrey Zhuravlev et al.: "ISAR for concealed objects imaging" describes a microwave screening system comprising two linear vertically oriented antenna arrays forming gates through which a subject should move and one or more 3D video sensors used to capture the motion of the subject through the gates.

BRIEF DESCRIPTION OF THE DRAWINGS

Embodiments of the present invention will be understood and appreciated more fully from the following detailed description, made by way of example only and taken in conjunction with drawings in which:

Figure 1 shows a sensor for scanning a target according to an embodiment;

Figure 2 shows a device 200 configured to produce a SAR image according to an embodiment;

Figure 3 shows a method of forming a synthetic aperture radar image according to an embodiment;

Figure 4 shows a structure from motion method;

Figure 5 shows a method of forming a set of apertures;

Figures 6A-6C show images of a shed with a 3D model of the shed overlaid; and

Figures 7A and 7B show video assisted ISAR (VAISAR) images of the shed of Figures 6A-6C with an outline of the 3D model overlaid.

DETAILED DESCRIPTION

According to a first aspect of the invention there is provided a method for producing a radar image, the method comprising: (a) receiving a set of optical images of an object to be imaged taken by an optical sensor from varying positions relative to the object; (b) receiving a sequence of radar measurements of the object taken by a radar sensor from varying positions relative to the object; (c) determining the trajectory of the optical sensor relative to the object based on the optical images using structure from motion, wherein structure from motion uses target feature tracks in combination with distance measurements from the sequence of radar measurements to estimate a structure of the object and the trajectory of the optical sensor relative to the object; (d) determining the trajectory of the radar sensor relative to the object based on the relative positions of the radar sensor and optical sensor and based on the trajectory of the optical sensor; and (e) forming a synthetic aperture radar, hereinafter referred to as SAR, image of the object based on the radar measurements and the determined trajectory.

By utilising images from an optical sensor (such as a camera) moving relative to the object, the trajectory of the radar sensor relative to the object may be determined. This allows radar measurements to be combined to form accurate SAR images even when the trajectory of the object is not otherwise known.

The optical images may be visible or non-visible images that is, the optical images may be of any range of wavelengths which are suitable for being used to determine the trajectory of the object (such as via video tracking). The optical images may be obtained via an optical camera. The optical sensor may be any suitable imager operating in an appropriate range of wavelengths, such as one or more of the infrared, visible and ultraviolet spectra. The optical sensor may be a hyperspectral imager, i.e. one which operates in multiple bands. Moreover, the optical image may be obtained via a plurality of cameras or optical sensors. In one embodiment, the trajectory is determined based on video tracking. The optical images may be video frames taken by a video camera at varying relative positions around the object.

In one embodiment, determining the trajectory of the radar sensor relative to the object comprises determining the trajectory of the optical sensor relative to the object based on the optical images, and determining the trajectory of the radar sensor relative to the object based on the relative positions of the radar sensor and optical sensor. The radar sensor and the optical sensor may have a predefined or constant relative displacement, for instance, the radar sensor and optical sensor may be mounted onto the same platform.

In another embodiment, the radar sensor and optical sensor are movable relative to each other, and the relative displacement and/or the trajectory of the radar sensor or optical sensor relative to the other is known. For instance, the optical sensor and radar sensor may be mounted on different moving platforms, such as different unmanned aerial vehicles, and passed by the object.

Accordingly, the trajectory of the radar sensor relative to the object is determined based on the trajectory of the optical sensor and the known or measured position of the radar sensor relative to the optical sensor.

Relative trajectory between the radar sensor and the object may mean the object is moving and the radar sensor is stationary, the radar sensor is moving and the object is stationary, or the radar sensor and the object are moving along different trajectories.

The optical images and radar measurements should be taken during corresponding periods of time. To provide radar measurements corresponding to the optical images at a given time, the radar measurements may be interpolated to provide estimates of the radar measurement for a time corresponding to given optical image. Conversely, measurements derived from the optical images may be interpolated to provide an estimate for their value at a time corresponding to a given radar measurement.

According to a further embodiment, determining the trajectory of the optical sensor relative to the object comprises tracking the movement of one or more sections of the object across the set of optical images and determining the trajectory of the optical sensor relative to the object based on the tracked movement.

The determination of the trajectory of the radar sensor relative to the object may also be based on the radar measurements. This allows the distance between the radar sensor and the object to be taken into account to compensate for any apparent changes in the size of the object.

According to an embodiment, the method further comprises determining a model of the shape of the object based on the optical images. By determining the shape of the object, the model may be used to improve the imaging. The model may also be superimposed onto the SAR image to help in the analysis of the SAR image.

In one embodiment, the method further comprises, for each optical image, determining the distance from the optical sensor to the object based on the radar measurements and the displacement between the radar sensor and the optical sensor, and the determination of the model utilises the distances determined from the radar measurements to determine the absolute size of the model and compensate for apparent changes in the size of the object due to variations in the distance. Accordingly, the method may determine characteristics of the model, e.g. length, width, height etc.

The model and the trajectory of the radar sensor relative to the object may be estimated together, either simultaneously or iteratively. In the iterative embodiment, the trajectory is determined and used to determine the model, which in turn is used to improve the estimate of the trajectory; at each iteration, using more accurate estimates of the trajectory will give a more accurate estimate of the model and vice versa.

In one embodiment, the SAR image is formed based on pixel positions determined based on the model of the object. These pixel positions are therefore at known positions relative to the object which are derived from the model of the object. The pixel positions can be defined along a pixel plane or pixel surface. This allows the SAR image to be formed along a plane or surface which is appropriate for the given object. SAR images can be formed on more than one pixel surface.

The pixel plane may be aligned with a major axis of the model or object, or aligned with horizontal plane determined from model (e.g. through comparison with known target shapes). In one embodiment, the pixel positions lie in a pixel plane, the pixel plane being the plane that that minimises the perpendicular extent of the object. This ensures that, where the object is substantially planar, the SAR image is formed along the plane of the object, thereby providing a useful cross-section of the object. The perpendicular extent of the object may be determined from the model. Minimising the perpendicular extent of the object means minimising the height or depth of the object along a path perpendicular to the pixel plane. Accordingly, the pixel plane may be determined from the model of the object to determine the pixel positions.

The method may further comprise superimposing a representation of the model onto the SAR image for comparison. The representation may be a surface model, a wire frame or an outline of the model. The model may be projected directly onto the object in the SAR image or alongside the object for side-by-side comparison. This can help the user to locate items hidden within objects, for instance, smuggled items within a vessel.

According to an embodiment, the method further comprises repeating steps (a) to (e) to form one or more additional SAR images based on one or more sets of additional optical images and one or more sets of additional radar measurements, the one or more additional SAR images being formed from synthetic apertures corresponding to one or more further trajectories of the radar sensor relative to the object, the trajectory and the one or more further trajectories combining to form an overall trajectory of the radar sensor relative to the object, and forming a combined SAR image based on the SAR image and the one or more further SAR images. This allows multiple SAR images to be determined and combined to form a combined SAR image which makes use of information obtained from various positions around the object.

Forming the combined SAR image may comprise transforming the one or more further SAR images to common pixel positions based on the determined further trajectories of the radar sensor, and combining the transformed further SAR images to form the combined SAR image. The pixel positions of the combined SAR image may be determined based on the model of the object. These pixel positions are therefore at known positions relative to the object which are derived from the model of the object. The pixel positions could be in a plane or on a surface. This allows the combined SAR image to be formed along a plane or surface which is appropriate for the given object. Combined SAR images could be formed on more than one alignment plane. The pixel positions of the combined SAR images may be determined based on the model of the object. Transformation of the initial SAR images may transform the initial SAR images onto an alignment plane which is based on the model of the object. The alignment plane can be chosen based on the shape of the object model, for example, the plane that minimises the vertical extent of the object or a plane perpendicular to the object vertical.

The method may further comprise superimposing a representation of the model onto the combined SAR image for comparison. Again, this helps the user to interpret the SAR image. The representation may be a surface model, a wire frame or an outline of the model. The model may be projected directly onto the object in the SAR image or alongside the object for side-by-side comparison.

According to a second aspect of the invention there is provided a device for producing a radar image, the device comprising a controller configured to: (a) receive a set of optical images of an object to be imaged taken by an optical sensor from varying positions relative to the object; (b) receive a sequence of radar measurements of the object taken by a radar sensor from varying positions relative to the object; (c) determine the trajectory of the optical sensor relative to the object based on the optical images using structure from motion, wherein structure from motion uses target feature tracks in combination with distance measurements from the sequence of radar measurements to estimate a structure of the object and the trajectory of the optical sensor relative to the object and the trajectory of the optical sensor relative to the object; (d) determining the trajectory of the radar sensor relative to the object based on the relative positions of the radar sensor and optical sensor and based on the trajectory of the optical sensor; and (e) form a synthetic aperture radar, hereinafter referred to as SAR, image of the object based on the optical images, the radar measurements and the determined trajectory.

In one embodiment, determining the trajectory of the radar sensor relative to the object comprises determining the trajectory of the optical sensor relative to the object based on the optical images and determining the trajectory of the radar sensor relative to the object based on the relative positions of the radar sensor and optical sensor.

Determining the trajectory of the optical sensor relative to the object may comprise tracking the movement of one or more sections of the object across the set of optical images and determining the trajectory of the optical sensor relative to the object based on the tracked movement.

The determination of the trajectory of the radar sensor relative to the object may also be based on the radar measurements.

In one embodiment, the controller is further configured to determine a model of the shape of the object based on the optical images.

The controller may be further configured to, for each optical image, determine the distance from the optical sensor to the object based on the radar measurements and the displacement between the radar sensor and the optical sensor, and wherein the determination of the model utilises the distances determined from the radar measurements to determine the absolute size of the model.

The SAR image may be formed based on pixel positions determined based on the model of the object. The pixel positions are therefore at known positions relative to the object which are determined based on the model.

In one embodiment, the pixel positions lie in a pixel plane, the pixel plane being the plane that that minimises the perpendicular extent of the object.

In one embodiment, the controller is further configured to superimpose a representation of the model onto the SAR image for comparison.

In a further embodiment, the controller is further configured to repeat steps (a) to (d) to form one or more additional SAR images based on one or more sets of additional optical images and one or more sets of additional radar measurements, the one or more additional SAR images being formed from synthetic apertures corresponding to one or more further trajectories of the radar sensor relative to the object, the trajectory and the one or more further trajectories combining to form an overall trajectory of the radar sensor relative to the object, and form a combined SAR image based on the SAR image and the one or more further SAR images.

Forming the combined SAR image may comprise transforming the one or more further SAR images to common pixel positions based on the determined further trajectories of the radar sensor and combining the transformed further SAR images to form the combined SAR image.

The pixel positions of the combined SAR image may be determined based on the model of the object.

The transformation of the initial SAR images may transform the initial SAR images onto an alignment plane which is determined based on the model of the object.

In one embodiment, the method further comprises superimposing a representation of the model onto the combined SAR image for comparison.

As mentioned above, SAR imaging requires accurate knowledge of the relative motion of the antenna and the target. Radar signals alone do not provide enough information to reconstruct this relative motion. Accordingly, embodiments of the present invention utilise optical imagery to determine the trajectory of the antenna relative to the target. This imagery may also be utilised to determine the 3D orientation and scaling of the target, which is not possible using conventional ISAR. The known orientation and scaling allows radar images to be combined and to be compared with an optically-derived 3D target model so that internal reflections (such as from hidden cargo) may be identified.

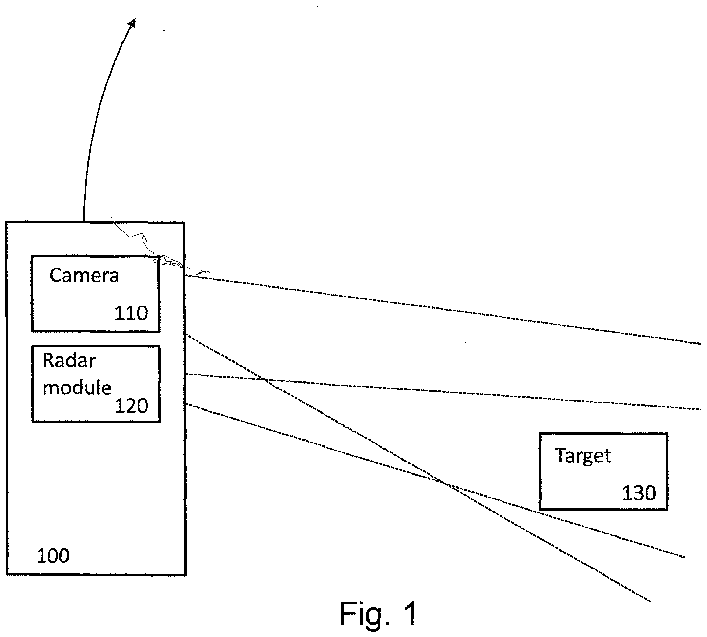

Figure 1 shows a sensor for scanning a target according to an embodiment. The sensor 100 is travelling along a trajectory (indicated by the arrow) relative to the target 130. The sensor 100 comprises a camera 110 and a radar module 120. The camera 110 is a video camera which is configured to capture a sequence of images of the target 130. The radar module 120 comprises a radar antenna for transmitting radar signals and a radar receiver for receiving radar returns from the target 130. This sensor 100 allows images and radar signals to be captured at varying locations relative to the target 130.

The camera 110 should be pointed at the target 130 for the target 130 to be successfully imaged. This might be achieved manually, e.g. via an operator controlling the direction of the camera 110, or automatically e.g. via a controller configured to track the target 130 and to control the camera 110 to maintain the target 130 within the field of view of the camera 110. Data collection might be initiated by an operator designating a specific target 130. In one embodiment the camera 110 is sensitive to visible light. In alternative embodiments the camera 110 is sensitive to infrared or other wavebands or multiple wavebands, depending on the specific characteristics of the target 130 and the environmental conditions anticipated.

Operation is more likely to be successful if the apparent size of the target 130 is large compared with the angular resolution of the camera 110, and target 130 features appear sharp and have good contrast in the image.

The camera 110 must capture a sufficient number of frames per second to record the relative motion of the target 130.

The radar module 120 should be pointed at the target 130. This might be achieved by slaving it to point at the same location as the camera 110. The radar must be coherent, that is, there must be an accurately known phase relationship between the transmitted and received radar signal.

The radar module 120 may operate in a variety of frequency bands (e.g. UHF, L, S, C, X, Ku, K or Ka). The choice of frequency band will depend on such considerations as resolution (generally better resolution at higher frequencies) and penetration into the vessel (generally better at lower frequencies).

A variety of modulation schemes would be suitable for the radar module 120 (e.g. linear FM, stepped frequency). In the present embodiment the modulation scheme is such that the radar signal is fully-sampled (e.g. for a pulsed radar, that the pulse repetition frequency is greater than twice the Doppler bandwidth). If this is not the case, images are at risk of aliasing ambiguities. In an alternative embodiment the radar is not fully sampled. A variety of techniques have been proposed for ameliorating such ambiguities, but these will not be discussed here.

The radar resolution $\rho_R$ is given by:

$$\rho_R = \frac{k_R c}{2B}$$

where $B$ is the radar bandwidth, c is the speed of light and $k_R$ is a factor associated with spectral weighting (e.g. 0.89 for a flat weighting, 1.30 for a Hamming weighting).

Radar system engineers will understand the trade-offs involved in selecting an appropriate frequency band, bandwidth, spectral weighting and modulation scheme.

In the present embodiment the radar signal is pulse-compressed (if necessary) as a pre-processing step. It will be clear to the skilled person that alternative embodiments may implement equivalent radar schemes which avoid this (e.g. for reasons of efficiency).

In one embodiment, the radar antenna has a relatively narrow azimuth beamwidth, so that at the intended operating range the area illuminated by the beam is larger than the expected targets by a small factor (perhaps 2 or 3). For example, a system designed to image 10 m vessels at a range of 1 km might have an azimuth beamwidth of 1.5 degrees, illuminating a patch about 26 m wide. In alternative embodiments, larger beamwidths are used, with the radar data being be pre-processed (e.g. exploiting Doppler information) to achieve a similar effect, thereby limiting radar reflections from other nearby objects and large areas of the sea surface or other background.

Polarimetric radar might be used to obtain additional information. Depending on the geometry, different polarisations will be more or less effective at penetrating inside a vessel.

The sensor 100 may be configured to be mounted on a moving platform. For instance, the sensor 100 may be mounted onto an airborne platform, allowing a trajectory that is suitable for imaging to be formed by flying an appropriate path near the target. Various platforms could be used, including fixed-wing or rotary-wing aircraft and piloted or unpiloted aircraft. For instance, the sensor 100 may be mounted on a plane, unmanned aerial vehicle or any other airborne platform which may be flown past the target 130.

In an alternative embodiment, the sensor 100 may be mounted on a surface vessel on water, manned or unmanned, or on land, and operated in a similar manner. Various surface vehicles could be used, including boats, ships, cars and trucks. As with the airborne platform, the surface vessel may be driven past the target 130 to produce the required relative trajectory between the sensor 100 and the target 130.

The motion of the sensor 100 relative to the target 130 can be determined from the camera 110 images and used in producing SAR images from radar signals. In one embodiment, this is achieved by a controller on the sensor 100 itself. Alternatively, the images and radar signals may be stored and/or transmitted to a remote device which is configured to perform the data processing.

In an alternative embodiment, the relative motion between the sensor 100 and the target 130 is achieved through motion of the target 130. The radar module 120 and/or the camera 110 may be mounted on land. This is particularly useful for imaging targets which have to pass close to a fixed point: e.g. entering or leaving a port. In an alternative embodiment the radar module 120 and the camera 110 are not collocated, and the trajectory of the radar module 120 is determined from the trajectory of the camera 110 and the relative positions of the camera 110 and radar module 120. Embodiments are suitable for imaging targets on land, sea or in the air. For instance, embodiments may be used to image land vehicles with soft sides.

The radar module 120 and camera 110 are directed at the target 130 for a period, for instance, several seconds. The optical images from the camera 110 are used in conjunction with range measurements from the radar 120 to estimate the relative orientation of the target 130 to the sensor 100 and to reconstruct a 3D model of the target 130. Knowledge of the relative orientation allows a sequence of high-resolution radar images to be formed and combined. These can be compared directly with the 3D target model to allow the user to analyse the external and internal structure of the target 130 and assess whether it may contain suspicious cargo. This allows the remote detection of some cargos that were previously not detectable with remote searches.

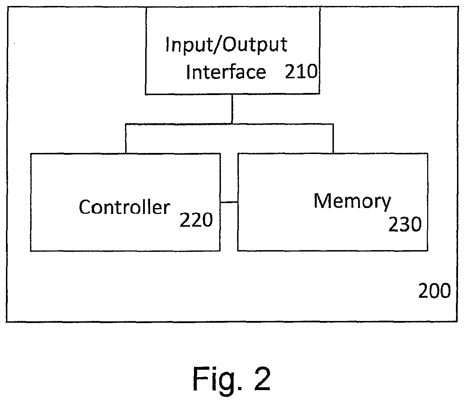

Figure 2 shows a device 200 configured to produce a SAR image according to an embodiment. The device 200 comprises an input/output interface 210, a controller 220 and memory 230. The input/output interface 210 is configured to receive image data and radar data of a target being imaged. As discussed above, the image data comprises a series of images taken from different positions relative to the target. The radar data comprises a series of radar measurements of the target, taken from known positions relative to where the images were taken. The camera and radar module may be collocated, such as in sensor 100.

In alternative embodiments the camera and radar module may be located on different sections of a platform. The camera and radar module may be mounted on different platforms provided that the relative positions of the platforms are known (e.g. via GPS). The camera and radar module may be stationary, with the relative trajectory of the object and the camera and radar module being provided by movement of the object. In the present embodiment, the camera and radar module are located on the same platform (sensor 100).

The controller 220 is configured to receive the image data and radar data from the input/output interface 210 and to determine the position and orientation of the target relative to the radar at the time of each radar measurement. That is, the controller 220 is configured to determine, for each measurement, the position and orientation of the target relative to the position at which the radar measurement was captured. The controller 220 is configured to use the determined positions to form a synthetic aperture radar image from the radar measurements. The SAR image may be stored in memory 230 or output via the input/output interface 210.

Memory 230 stores executable code which, when executed by the controller 220, causes the controller 220 to analyse the camera images and form synthetic aperture radar images as described herein.

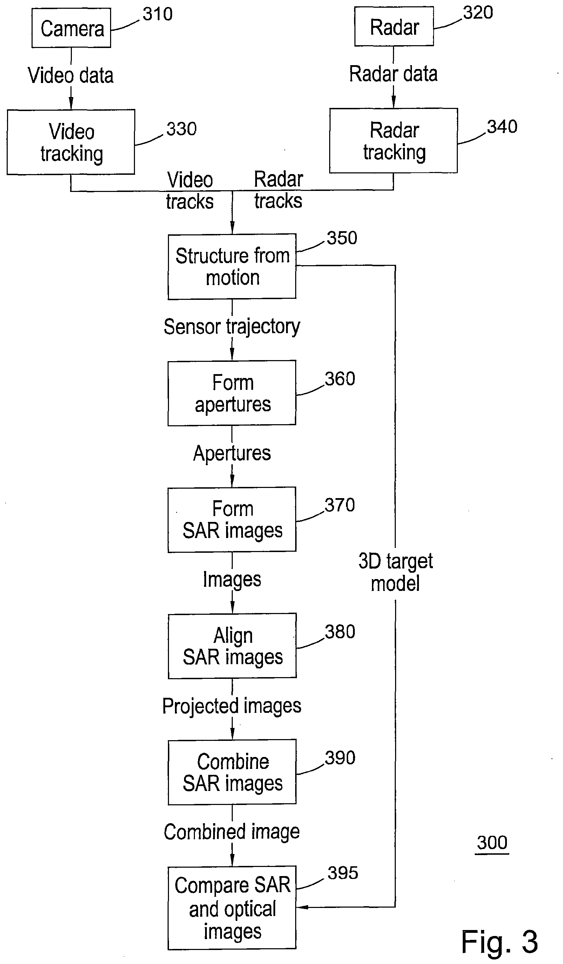

Figure 3 shows a method 300 of forming a synthetic aperture radar image according to an embodiment.

Camera 310 and radar 320 data are received. The camera data is a series of images (such as video data) of an object to be imaged, taken from varying positions relative to the object. The radar data is a series of radar measurements taken from varying positions relative to the object. The radar measurements are detected coherent radar returns from the object.

The images are used to determine the trajectory of the camera relative to the object. This is achieved through video tracking 330. This involves tracking features on the object from image to image to determine the motion of the camera relative to the object. Radar tracking 340 determines the distance to the target from the radar module.

The target feature tracks are then used in combination with the distance measurements supplied by the radar to estimate: 1) the 3D structure of the target (the object) and 2) the trajectory of the sensor in a coordinate frame fixed in the target. This is achieved through structure from motion 350.

Radar apertures are then formed 360. Based on the analysis of the trajectory, the sequence of radar measurements is divided into overlapping apertures, intended to produce images with similar resolutions. For example, when the target is rotating rapidly apertures will be short. When it is rotating more slowly, apertures will be longer.

SAR images are then formed based on the apertures 370. The radar data for each aperture is used to form an image. Since the trajectory is known, this imaging process (effectively "Synthetic Aperture Radar") forms an image of known scale and orientation. Imaging may include an autofocus process to improve image quality and correct for errors in trajectory estimation.

The SAR images are then aligned 380 to a common origin, orientation and scale. Alignment accounts for the known differences in origin, scale and orientation. In one embodiment, alignment also estimates any residual offset by comparing images and accounts for these unknown differences in origin, scale and orientation. Alignment allows the SAR images to be combined 390. This may be achieved by simply summing the amplitude in corresponding pixels. More sophisticated processing (e.g. identifying and discarding any images that were of poorer quality) might be beneficial.

Since the optically-derived 3D model of the object and the radar images share a common coordinate frame, the 3D model can also be compared 395 with the combined radar image, e.g. by projecting its outline onto the radar image. This allows the user to easily determine known features in the radar image and separate these from unknown (unseen) features which may be of interest to the user (for instance, the cargo on a ship).

The distance information from the radar measurements is used in this particular structure from motion scheme to provide an absolute scale for the 3D target model which is generated, and to compensate for apparent changes in target size caused by variations in distance. In addition to the recovery of target shape, this (radar-informed) structure-from-motion method produces an estimate of the trajectory of the radar module, thereby allowing the formation of a SAR image.

The above processing steps shall now be described in more detail.

**Video Tracking**

The image data is processed to separate the target from the background and identify fixed points on the target. The positions of the fixed points (in pixel coordinates) are measured in each image (each frame of the video). These coordinates are converted to bearings. Each bearing is an angle in a coordinate frame fixed in the camera. The transformation from coordinates to bearings is established via camera calibration.

The target may be separated from the background using a variety of approaches ranging from the exploitation of intensity and texture discontinuities to full object recognition. In the present embodiment, part of the background may be included in the target segment without problems as the background is unlikely to give rise to features that will be identified as fixed points on the target.

The image feature points on the target which are tracked should correspond to consistent physical locations on the target. A point which has been tracked over a substantial number of frames and maintains a relatively stable form is more likely to be associated with physical structure than with, for example, a transient pattern of illumination.

Accordingly, a set of feature points is identified whose members can be effectively matched across an image sequence. Such points should be markedly distinct from the points in their neighbourhood. Established image processing methods for identifying such interest points include the Harris operator and the relevant component of the scale-invariant feature transform (SIFT) algorithm. The Harris operator is described in Harris, C. and Stephens, M. 1988, "A combined corner and edge detector", In 4th Alvey Vision Conference.147-151. The SIFT algorithm is described in Lowe, D. 2004, "Distinctive image features from scale-invariant keypoints", Int. J. Comput. Vision 60, 2, 91-110.

Each representation of each feature point which is employed for matching must be robust to the geometric and photometric transforms which will pertain from frame to frame. A family of descriptors have been developed for this purpose. According to one embodiment the feature points are represented according to Lowe's SIFT algorithm.

One option is to employ a scheme which tracks image regions as well as feature points. A coarser primary search based on matched image regions, rather than individual points per se, could precede a secondary, more precise point-based localisation. Such methods can be effective for bland imagery where there is a lack of distinctive feature points, or where the appearance of the target is degraded in various ways.

In one embodiment, the tracking method returns point locations to the nearest pixel. In an alternative embodiment, the tracking method offers sub-pixel precision. For example, in one embodiment the tracking method involves normalised cross-correlation. This is typically performed over a regular grid. Interpolation can then be applied to produce sub-pixel (or sub-interval) estimates. In contrast to such forms of local search, gradient-based methods, often iterative, return fractional estimates of displacement. These two forms of measurement could be employed in a combined scheme.

In one embodiment, the video tracking method uses knowledge that the fixed points will have a limited motion between frames.

The video tracking will determine a set of trajectories (the azimuth and elevation angles) for each tracked feature corresponding to the motion of the feature in the frame of the camera.

### Radar Tracking

The radar data is processed in order to detect the presence of the target, associate the target in the radar data with the corresponding target in the image data, extract the radar signal for the target and estimate the target range. The target range is the distance to the target from the radar module.

To detect the target, each radar measurement is analysed. Range gating and/or Doppler filtering can be used to separate target return from energy reflected from the background.

As it is possible to track multiple targets at once, it is important that the same target is tracked with the radar and the camera. In one embodiment, the radar signal from a target is assigned to a target in an image based on an estimate of the distance to the object from the camera. This is determined from the image data and the position and orientation of the camera.

In an alternative embodiment, the association of targets in the image data and the radar data is based on an analysis of the SAR image produced by each possible association. The Video Assisted Inverse Synthetic Aperture Radar (VAISAR) processing described herein is applied to multiple radar signals. The correct target is likely to form a higher quality sequence of images. Known SAR image metrics, such as image contrast, could be used to determine the most appropriate match.

The radar signal for the target can be extracted from the full radar signal by known techniques such as range and Doppler alignment, range gating, and down-sampling in time. This operation reduces the quantity of propagated data but retains full information about the target.

### Structure From Motion

Structure from motion determines an estimation of the structure of the target and the trajectory of the camera.

The target structure is represented by the 3D positions of the physical points whose corresponding feature points have been tracked. With additional processing, this set of points can be extended to a wire-frame or a surface model. Whilst these models are not needed to form the radar images, they may be used for comparison with the radar images and for presentation to the user. In one embodiment, a wire-frame model is determined. This connects adjacent points on the surface of the target via line segments. In a further embodiment a surface model is determined. This might be a polygonal mesh. The surface model estimates the 3D shape of the target.

The trajectory of the camera is found in a target coordinate frame. The target coordinate frame is fixed relative to the target and has its origin at the centre of the target. Accordingly, the target coordinate frame, from the perspective of the camera, rotates with the target. As the target coordinate frame is fixed relative to the target, the trajectory of the camera in the target coordinate frame accounts for both the motion of the target and the motion of the camera. This trajectory is therefore the trajectory of the camera relative to the target.

In one embodiment, the radar module is collocated with the camera. This is convenient but is not essential, provided that the differential motion between the radar and the camera can be estimated. Accordingly, in a further embodiment, the camera and radar module are located on different platforms whose relative positions are known. The method described herein can be adapted to deal with data from a radar module displaced from the camera using standard techniques. Arrangements resulting in small distances between the radar module and the camera (e.g. mounted at different positions on the same platform/aircraft) are likely to require minimal adaptations.

Techniques for structure from motion have been widely studied and most of these techniques could be adapted to support Video Assisted ISAR. One embodiment applies the approach described by Tomasi and Kanade (C. Tomasi and T. Kanade, 'Shape and motion from image streams under orthography: a factorization method', International Journal of Computer Vision, vol. 9, no. 2, pp. 137-154, 1992). This method assumes a fixed, substantial distance between the camera and the target and employs a formulation of the problem in which the track measurements from the camera are arranged in a matrix. In the absence of measurement errors and distance variations, this measurement matrix would have rank 3. In practice, a rank 3 approximation of the matrix is factorised as the product of two matrices (using Singular Value Decomposition, SVD), one of the matrices giving implicit information about the 3D position of the tracked points and the other giving information about the 3D position of the camera. This information can be extracted by applying a "metric constraint" that assumes that the target is a rigid body and rotates without distorting. This basic approach assumes orthographic projection, but variant schemes employ a spectrum of image capture models up to full perspective projection. For example Poelman and Kanade (Conrad J. Poelman and Takeo Kanade, 'A Paraperspective Factorization Method for Shape and Motion Recovery', IEEE Transactions on Pattern Analysis and Machine Intelligence, vol. 19, no. 3, pp. 206-218, March 1997) apply factorisation to a scaled orthographic scheme which can tolerate and estimate varying distances between camera and object. It is not possible to recover absolute scale for any of these techniques however.

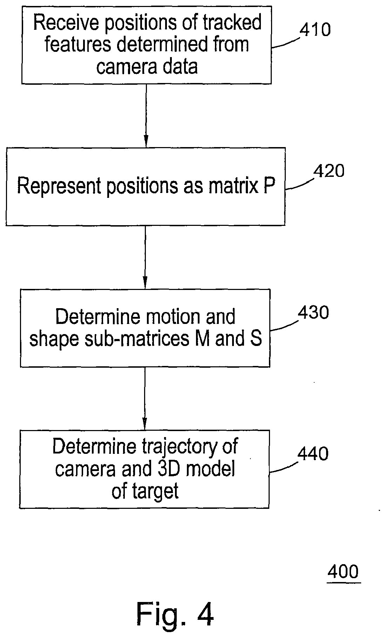

Figure 4 shows a structure from motion method 400. The method comprises receiving the positions of tracked features in each image as determined from the video tracking 410. These positions are represented in a matrix P 420. This matrix is then factorised to determine two matrices, M and S 430, whose product approximates P. Matrix M encodes an estimate of the trajectory of the camera and matrix S encodes an estimate of the shape of the target. Based on matrix S, a 3D model of the target is constructed. Specifically, the positions of the tracked points in the target coordinate system are determined. Based on matrix M, the trajectory of the camera in the same coordinate system is determined 440.

In one embodiment, the radar signal is used to determine the distance to the target which in turn is used to compensate for the apparent change in size of the target as the distance varies. This compensation can be achieved by a change from polar to rectangular coordinates, specifically a projection of the apparent position onto a plane parallel with the camera lens. For azimuth angle $\psi$ and elevation angle $\theta$ at range R this is represented by the transformation $(\psi, \theta) \rightarrow (R \sin \psi \cos \theta, R \sin \theta)$.

In a further embodiment, the positions derived from factorisation are revised using a maximum likelihood fitting procedure. This may be a non-linear least squares method or some alternative technique. In one embodiment this procedure iteratively alternates estimation of trajectory positions and target points. The resulting estimates are likely to be more accurate than the original estimates.

In some embodiment, only points on the target that are tracked throughout the trajectory are used in the matrix P that is factorised. It is beneficial, in terms of improving the accuracy of trajectory reconstruction and extending the duration of the trajectory that can be reconstructed, to deal with incomplete tracks: that is, tracks from points that are only tracked for part of the trajectory. Such tracks will arise naturally as the target is viewed from different aspect angles, and parts of the target become obscured.

One embodiment estimates a part of the trajectory for which a sufficiently large number of complete tracks is available, that is, where the number of complete tracks exceeds a predetermined threshold.

Further embodiments replace missing measurements from incomplete tracks in matrix P by techniques referred to as "matrix completion". A number of approaches for solving the matrix completion problem have been published. In a further embodiment, the trajectory determined in step 440 is extended by using additional measurements taken before or after the measurement set used for factorisation. The additional trajectory positions could be estimated using a maximum likelihood fitting procedure.

In one embodiment, the positions of additional fixed points on the target are estimated from incomplete tracks. These positions could be estimated by a maximum likelihood fitting procedure.

In a further embodiment, the process of extending the trajectory and adding points from incomplete tracks can be repeated iteratively. Iteration could be terminated when no further extensions are possible.

In a further embodiment bad tracks (e.g. tracks that do not correspond to fixed points on the rigid body) are identified along with bad measurements (e.g. measurements that have large errors). These can be excluded from the computation of the trajectory and target points.

In a further embodiment, constraints are applied on the estimates of camera and target motion, taking account of the limited angular accelerations that are possible. This improves the accuracy of the estimated trajectory and target model. If the camera's motion is known accurately, a model for the target motion might be chosen and the target motion estimated using, for example, a Kalman filter.

In a further embodiment, prior knowledge of target geometry may be used to assist in estimation of the target's 3D structure. Such knowledge may be derived from measurements taken from similar targets previously (e.g. the separation of specific features) or an assumption of approximate bilateral symmetry. Recognition of target similarity may be provided by an operator or by automatic processing.

Occlusions (e.g. fixed points on the target that are sometimes hidden by other parts of the target) can be handled by applying known methods.

The structure from motion process described requires accurate knowledge of the mapping of pixel positions to angles in the coordinate frame of the camera. This mapping is typically defined in terms of certain internal camera parameters, the most important being focal length. In the preferred embodiment, these parameters are estimated by calibration of the camera: errors in these estimates are negligible and remain fixed. However, changes in the camera parameters, due perhaps to changes over time or variations in temperature, or inadequacies in the calibration, may lead to errors in the parameter estimates.

A further embodiment utilises autocalibration to refine the estimates of the internal camera parameters. Autocalibration might be implemented by extending the maximum likelihood estimation of trajectory and target point positions to include estimation of the camera parameters as well.

**Form Apertures**

The radar trajectory (the time history of its position in the target frame) is divided into overlapping segments which are referred to as "apertures". Each of these corresponds to a synthetic aperture used to form a radar image. Some parts of the trajectory may be unused if the motion is unsuitable.

In assessing the suitability of a potential aperture the method considers:

- the point at the centre of the target;
- a plane (the "imaging plane") passing through the centre of the target and lying closest to the trajectory (e.g. in a least squares sense);
- the projection of the trajectory onto the imaging plane;
- the angle subtended by this projection at the centre of the target - the aperture angle $\delta\theta$;
- the line segment in the imaging plane that is closest to the trajectory (the "nominal trajectory"); and
- the average angle between the imaging plane and the trajectory measured from the centre of the target - the out-of-plane angle.

Alternative techniques may be substituted for fitting the imaging plane to the trajectory and for quantifying the out-of-plane angle, as will be understood by those skilled in the art.

The aperture angle $\delta\theta$ determines the cross-range resolution $\rho_a$

$$\rho_a = \frac{k_a \lambda}{2\delta\theta}$$

Here $\lambda$ represents the wavelength corresponding to the radar centre frequency and $k_a$ is an aperture weighting factor (e.g. 0.89 for uniform weighting, 1.30 for Hamming weighting). In principle, for isotropic reflectors, the larger the aperture angle the higher the resolution achieved. In practice, many reflectors are non-isotropic and images will be degraded if too large an aperture angle is used. The optimum aperture angle may depend on the characteristics of the radar and typical targets, and would be established by making appropriate measurements with the system. It might be in the range of 1-5 degrees.

An aperture with a large out-of-plane angle will generally not be suitable for forming focused radar images. Parts of the trajectory with large out-of-plane motion will probably need to be discarded. The appropriate limit on out-of-plane motion will depend on the characteristics of the radar (in particular the wavelength) and of the target (in particular, its vertical extent). The limit could be established by mathematical analysis of a type well known to experts in the field, or by analysis of data collected from typical targets.

In one embodiment, the apertures are overlapped. This typically makes fuller use of the available data and makes it easier to align the images from different apertures. In one embodiment, the apertures are overlapped by between 50% and 75%. Relative to no overlap, 50% overlap approximately doubles the processing required and 75% overlap quadruples the processing.

Apertures will probably have similar aperture angles and hence resolutions.

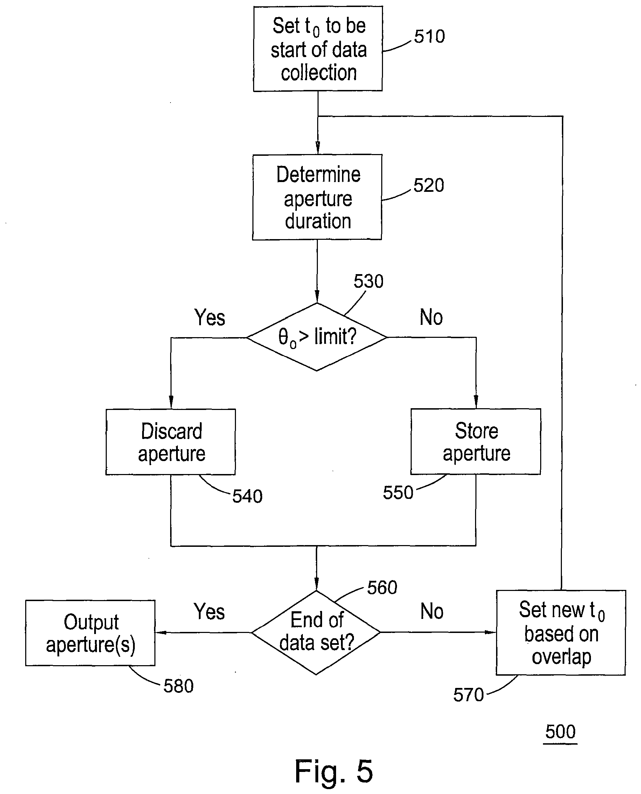

Figure 5 shows a method 500 of forming a set of apertures.

The aperture start time at $t_0$ is set to the start time of the data set 510. The aperture duration is then determined 520 based on the required aperture angle 520. It is then determined whether the out-of-plane angle $\theta_O$ is greater than a predefined limit 530. If so, then the aperture is discarded. If not then the aperture is stored 550. It is then determined whether the end of the data set has been reached 560. If not, then a start time for the next aperture is determined based on the required overlap 570 and the method repeats from step 520 to determine a new aperture duration. If the end of the data set has been reached then the aperture(s) stored so far are output 580.

Method 500 may be adapted in a number of ways to include additional steps to improve aperture formation.

**Form SAR Images**

Once the apertures have been determined, the SAR images may be formed. In the present embodiment, SAR processing for a single aperture forms a two-dimensional image. It is convenient to consider imaging for a straight line trajectory first, and then to consider the effect of deviations from such a path.

The formation of SAR images can be subdivided into three steps:

1. Select pixel positions
2. Compute image
3. Autofocus image

Select pixel positions

If the trajectory followed during the aperture is a straight line in the imaging plane, the range history (and hence the radar phase history) for any point in 3D space is the same as a single point in the imaging (half) plane. This means that reflectors at any position will be imaged as if they are at the corresponding position in the imaging plane.

In practice, the antenna beamwidth (or pre-processing) and range-gating will limit the angular extent of the imaged patch, so that the only reflections expected should originate from positions close to the target.

The pixels that form the SAR image will each have a specific position in 3D space (in the target coordinate system). These pixels should be sufficiently close together to ensure that the image is fully-sampled taking account of the radar resolution. In principle, it should be possible to transform between any fully-sampled sets of pixel positions either without degradation (if transforming between coplanar sets of positions) or with only a small degradation. This means that the precise choice of pixel positions is not critical.

Since the image is naturally two-dimensional, it is most natural to consider sets of pixels lying in some 2D surface (the "pixel surface") or probably a plane (the "pixel plane").

A simple choice of pixel positions would be:

- The pixel plane is the imaging plane

- The origin is at the centre of the target

- The down-range direction is aligned from the centre of the nominal trajectory to the centre of the target

- The cross-range direction lies in the imaging plane, perpendicular to the down-range direction

- Pixels are uniformly spaced with the same spacing in cross-range and down-range. This spacing would be an appropriate fraction (perhaps 80%) of the smaller of the cross-range and down-range resolutions to ensure full sampling.

- Pixels cover a rectangular extent, large enough to ensure complete coverage of the target.

For non-linear trajectories, reflectors that lie outside the pixel surface will be imperfectly focused. The greater the deviation of the trajectory from linear, specifically the greater the out-of-plane motion, the greater the degradation. For this reason, apertures with large out-of-plane motion are not used. Similarly, the further a reflector is from the pixel surface the greater the degradation. This fact could motivate alternative choices of pixel surface.

In one embodiment, a pixel plane is used that is aligned with the target. In one embodiment this is deduced from the radar position and lookdown angle. In an alternative embodiment, this is determined by aligning the pixel plane with the target 3D model. A horizontal pixel plane might be appropriate for a target whose horizontal extent is much greater than its vertical extent. Accordingly, in one embodiment, if the 3D model indicates that the target is substantially planar, the pixel plane is aligned with the plane of the 3D model. For example, the plane that minimises the perpendicular extent of the target could be used. In cases where the sensor position and orientation are known in world coordinates the direction of vertical, and hence the horizontal plane, may be deduced by computing the time-averaged direction of (world) vertical in the target coordinate system.

In one embodiment, if the target has reflectors that are a long way from any plane, a non-planar pixel surface is selected. In one embodiment this is derived from the 3D model of the target.

While choosing a pixel surface that is closer to the reflecting points on the target should improve the quality of focus, difficulties may arise if the angle between the imaging plane and the pixel plane (or the plane tangent to the pixel surface) becomes too large (e.g. more than 60°) as the resolution in the pixel plane will be degraded. In one embodiment, if the angle between a determined pixel plane and the imaging plane is greater than a predefined threshold then the aperture is discarded or an alternative pixel plane chosen.

Compute image

Techniques for computing SAR images are the subject of extensive literature. In most cases, the important differences between them concern the approximations required to achieve an efficient implementation, and many of them might be applied successfully.

Since the image is relatively small (probably thousands of pixels, rather than millions as is often the case for SAR imaging) the present embodiment employs a simple method that avoids unnecessary approximations.

A "delay and sum" method is used. Consider a pixel position given by vector $\vec{p}$ and a series of radar positions (positions from which radar measurements are taken) given by vectors $\vec{x_k}$ with the radar range profile received at this position given by $g_k(t)$ and a radar carrier centre frequency of $F$. These vectors are computed in the target frame of reference. Let $r_k = |\vec{p} - \vec{x_k}|$ be the distance to the pixel from the $k^{\text{th}}$ radar position. The corresponding delay $t$ can be found by dividing twice the distance $r_k$ by the speed of light c. The pixel value can be computed by summing the range profiles, with the appropriate delays and phase corrections, over all $n$ radar positions within the aperture:

$$pixel\ value = \sum_{k=1}^{n} e^{\frac{4\pi i F r_k}{c}} g_k\left(\frac{r_k}{2c}\right)$$

Accordingly, the pixel value for the given pixel position is the sum of the appropriately corrected radar returns corresponding to that pixel position across all radar measurements in the aperture.

It will be clear to those knowledgeable in radar signal processing that this process may need to be adapted to the precise form of the range profile provided by the radar and that it may be convenient to combine this step with other processing.

In a further embodiment, aperture weighting (also referred to as windowing) is applied. A weighting function $w_n(k)$ is used in computing the pixel value:

$$pixel\ value = \sum_{k=1}^{n} e^{\frac{4\pi i F r_k}{c}} w_n(k) g_k\left(\frac{r_k}{2c}\right)$$

This can provide an improvement in the dynamic range (an ability to resolve weak reflections in the presence of strong reflections).

For a Hamming weighting the weighting function can be written as:

$$w_n(k) = 0.54 + 0.46 \cos \frac{2\pi}{n} \left( k - \frac{n+1}{2} \right)$$

The trade-offs involved in selecting an appropriate weighting will be well understood by those knowledgeable in radar signal processing.

Autofocus image

In general, it is likely that the image computed in the previous step will be degraded by a variety of errors, in particular errors in the estimated position of the radar. In one embodiment, this degradation is reduced by autofocus processing. A summary of SAR autofocus techniques can be found in (W. G. Carrara, R. S. Goodman, and R. M. Majewski, Spotlight Synthetic Aperture Radar: Signal Processing Algorithms. Boston: Artech House, 1995) and a number of these might be applicable. Autofocus techniques include:

- Contrast optimisation: this compares different focusing corrections using a "contrast" metric and selects the one that gives the largest contrast. A possible contrast metric is the ratio of the standard deviation to the mean of the pixel amplitudes.

- Phase Gradient autofocus: this analyses the shape of the response to bright reflectors and computes corrections to make the response sharply peaked. Phase Gradient autofocus employs windows of different sizes: a large window will capture all the information from a defocused peak; a small window is less likely to include information from multiple peaks. In practice, an iterative scheme might be used, with the window size reduced at each step.

Phase Gradient and Contrast Optimisation can be used in combination: corrections can be computed with Phase Gradient, and only used if they improve contrast.

**Align SAR images**

To allow SAR images to be combined, they must be aligned. Ideally, a reflector that is stationary in the target should be imaged in the same pixel in all images. Since the target is three dimensional, while the image is a two dimensional projection of the target, this cannot be achieved perfectly for all target orientations, but it should be approximately achievable over a limited range of target orientations.

Images need to be aligned to one or more sets of common pixel positions, fixed relative to the body of the target. These pixel positions will generally lie on a surface (the "alignment surface") which in many cases will be a plane (the "alignment plane"). Since alignment will be more effective when the imaging plane lies close to the alignment plane, it may be useful to have multiple alignment planes, combining images only when the angle between the imaging and alignment planes is less than a predefined limit (perhaps 20 degrees). Since this method aims to image reflectors at their point of projection onto the alignment plane, we can, without loss of generality, limit consideration to alignment planes passing through the centre of the target. The following alternatives are among many that might be chosen for alignment planes:

- An alignment plane coinciding with the initial imaging plane. Subsequent imaging planes could be used as further alignment planes if they deviate too far from the initial alignment plane.

- A horizontal alignment plane. This might be deduced approximately if the radar position and lookdown angle is known. In an alternative embodiment this is deduced by analysis of the target 3D model. Further alignment planes might be used with fixed relationships to this. In one embodiment, the target 3D model is used to determine an alignment plane which is aligned with the target. For example, the alignment plane might be chosen to minimise the perpendicular extent of the target.

- An alignment plane computed as an average of the imaging planes used. Additional alignment planes might be chosen to minimise the angle of each imaging plane to the nearest alignment plane. (This approach would only be possible once all the data was available.)

The choice of pixel positions within the alignment plane is arbitrary, but a natural choice would be to place them on a square grid. Ideally, the pixel spacing should be small enough to ensure that the image is fully-sampled. In one embodiment, a spacing of 40% of the minimum of the cross-range and down-range resolutions of the radar is used.

Alignment needs to account for: 1) the known change in pixel positions between images; 2) the unknown change in pixel positions between images. This might be implemented in two steps, the first compensating for known changes and the second compensating for unknown changes. Alternatively, these two steps might be combined.

Alignment therefore involves: 1) estimation of the unknown misalignment between images; 2) interpolation within the image to compensate for the misalignment. These two processes are described in more detail below.

In one embodiment the alignment scheme comprises:

1. selecting an alignment plane and pixels;

2. interpolating the first image to find its values at the alignment pixels; and

3. for each new image:

   a. interpolating the new image to find its values at the alignment pixels;

   b. estimating the misalignment between the new image and the previous image; and

   c. interpolating the new image to compensate for the misalignment.

If multiple alignment planes are used, this process could be carried out independently for each alignment plane. If there were gaps in the sequence (e.g. because an aperture has been discarded as non-linear or because the imaging plane is too far from the alignment plane) each gap-free sequence might be aligned first and then combined. These combined images might, in turn be aligned and combined to produce a single image in each alignment plane.

The process might be made more robust by including additional comparisons to verify accurate alignment. Images that cannot be aligned accurately might be discarded.

Estimate misalignment

Various comparisons could be considered to measure image misalignment, including: 1) between consecutive pairs of images; 2) between multiple pairs of images (e.g. with $n$ images, we have up to $\frac{1}{2}n(n-1)$ possible pairs of images); and, 3) between one image and some combination of earlier images. In one embodiment, misalignment is estimated in multiple ways, and the estimate that is judged to be best is used.

Image misalignment could be modelled in a number of ways. These include:

- As a one-dimensional translation, orthogonal to the line-of-sight from the radar to the target
- As a two-dimensional translation
- As a translation and rotation
- As a translation, rotation and shear
- As a translation, rotation, shear and stretch

In some cases, more complicated models might be appropriate (perhaps to deal with large targets where structures at different distances from the imaging plane are imaged in different parts of the image).

Each of these models can be parameterised (e.g. rotation angle, translation vector); misalignment estimation involves estimating the model parameters.

In general, the larger the size of the target relative to the radar image resolution, the larger the number of model parameters that can be usefully estimated. Someone skilled in the art of radar imaging will understand the procedure involved in selecting an appropriate model based on either consideration of the likely imaging geometries and target characteristics, or analysis of radar images from representative scenarios. An adaptive scheme might consider different models and select the most appropriate. Model Selection is a well understood topic in statistics.

In one embodiment, misalignment model parameters are estimated by estimating the translation for a number of patches of the image. The translation may be one-dimensional or two-dimensional. These patches need to be 1) small enough that within the patch the misalignment is adequately approximated as a translation and 2) large enough that it contains enough information to measure the translation accurately and robustly. In the simplest case, estimating translation only, a single image patch could contain the whole image.

A set of translations estimated for a number of patches can be used to fit the parameters of the chosen model, using a least squares or other fitting procedure. In practice, it is possible that some of the translation estimates will contain large errors. To cope with this, a robust fitting scheme could be used. Numerous such schemes are used, for example, identifying and excluding bad measurements, and someone skilled in the art will be able to select an appropriate technique.

Possible techniques for estimating patch translations include 1) peak matching (identifying corresponding peaks in the two images, and finding their separation); and 2) cross-correlation. Cross-correlation can be coherent or non-coherent.

Coherent cross-correlation requires coherence between the images. In this context, coherence means that the images have correlated phases: images will be coherent if the relative phase of reflectors contributing to a single pixel of the image has not changed too much between images. As will be understood by those skilled in the art of radar signal processing, images should be coherent if they are formed from data collected with similar geometries and, in particular, if they are formed from overlapping apertures. Coherent cross-correlation involves cross-correlation of the complex radar images. For example, the cross-correlation of images $f_1(x,y)$ and $f_2(x,y)$ can be represented (using $\bar{z}$ to represent the complex conjugate of z) as an integral:

$$\rho(X,Y) = \iint \overline{f_1(x,y)} f_2(x + X, y + Y) \, dx \, dy$$

The values of $X$, $Y$ that maximise the absolute value $|\rho(X,Y)|$ are estimates for the translation between the images. Practically, the integral could be replaced with a summation, but as will be well understood by those skilled in the art of signal processing, this can be conveniently computed using Fourier techniques. Further, by zero-padding in the frequency domain, this allows the cross-correlation to be estimated on a sub-pixel grid. In combination with inverse interpolation of the peak location, this virtually eliminates quantisation errors in the estimates of translation.

Image coherence is a useful diagnostic for the quality of coherent alignment. For offset estimates $\hat{X}, \hat{Y}$, the image coherence is given by

$$\frac{\left| \iint \overline{f_1(x,y)} f_2\left(x + \hat{X}, y + \hat{Y}\right) dx \, dy \right|}{\sqrt{\iint |f_1(x,y)|^2 dx \, dy \iint |f_2(x,y)|^2 dx \, dy}}$$

Values of image coherence close to 1 are more likely to indicate a successful alignment.

Non-coherent cross-correlation does not use the phase of the complex image. As it is likely to be less accurate and robust than coherent cross-correlation, it may be used only to estimate offsets between image patches where coherence is not anticipated. A number of techniques can be used to improve the accuracy of non-coherent cross-correlation, in particular, subtracting the image mean, dealing with image edge effects, and upsampling to reduce quantisation errors. One possible implementation would find values of $X$, $Y$ to maximise

$$\iint \left||f_1(x,y)| - \mu_1\right|^p \left||f_2(x + X, y + Y)| - \mu_2\right|^p dx \, dy$$

Here $\mu_1$, $\mu_2$ are the means of the respective images and $p$ is the power law used. The appropriate power law used depends on the target characteristics. In one embodiment the power law value is between ½ and 2 ($1/2 \leq p \leq 2$).

Interpolate images

Having estimated the misalignment between images, a transformation is applied to fit one image to the other. This requires interpolation within one of the images.

Interpolation applied to complex, fully-sampled images can in principle be error-free, using interpolation with a sinc kernel:

$$f_{Interpolated}(x,y) = \sum_{j=-\infty}^{\infty} \sum_{i=-\infty}^{\infty} f(i,j) \, \mathrm{sinc}(x - i) \, \mathrm{sinc}(y - j)$$

$$\mathrm{sinc}\, x = \frac{\sin \pi x}{\pi x}$$

where

In one embodiment, this is approximated, with a trade-off between computation and accuracy. A number of techniques that are well known to those skilled in the art of signal processing can be applied to make this more efficient and accurate.

Fast techniques (using the Fast Fourier Transform) are available for specific image transformations including 1D and 2D translations, shear transformations, stretch transformations, and rotations.

These may be combined to cover a wide variety of transformations.

If more general transformations are required, these can be applied using more general (but less efficient) approximations to sinc interpolation.

Alignment might require interpolation within real images (e.g. for the alignment of combined images). A real image formed as amplitude squared can also be fully-sampled, but the sample spacing must be halved. Sinc interpolation is also appropriate for fully-sampled real images.

Alternative interpolation techniques might also be used, for example, linear interpolation or cubic spline interpolation. These might have advantages in some cases, particularly with undersampled images.

**Combine SAR Images**

Aligned SAR images can be combined in a variety of ways. In one embodiment, the combined pixel value is taken to be the average of the value of that pixel across the SAR images. In one embodiment, using $i,j$ to denote pixel number and $k$ to denote image number within the sequence of $n$ images, image pixels $I_{ijk}$ are combined to form an image $j_{ij}$ using

$$J_{ij} = \left( \frac{1}{n} \sum_{k=1}^{n} |I_{ijk}|^{p} \right)^{\frac{1}{p}}$$

The power law value $p$ is chosen depending on the target characteristics. In one embodiment, the power law value is between ½ and 2 ($1/2 \leq p \leq 2$). There are a number of alternative methods of combining images (e.g. taking a weighted mean or a median of the image amplitudes).

In one embodiment, this approach is enhanced by identifying images or regions within images that suffer from anomalies and excluding them from the average.

**Compare SAR and Optical Images**

Embodiments produce a 3D model of the target from the optical images and one or more 2D radar images. In one embodiment, these images are made available to an analyst for comparison and interpretation. Additional processing can make interpretation easier.

In one embodiment the outline of the target model is projected onto the combined SAR image. This allows the operator to determine which sections of the radar image relate to internal elements of the target.

In one embodiment, the user can select between various views (e.g. plan view, side view etc.) of the 3D model and the combined SAR image. This allows the user to alternate between registered views (e.g. plan views) of the target derived from the model and the radar image.

In one embodiment, the target model and/or the combined SAR image is processed to estimate and compensate for misalignment (e.g. translation, scaling or rotation) between the target model and the combined SAR image.

The user may rotate interactively the displayed image in two or three dimensions, possibly changing the plane in which the radar image pixels lie.

In one embodiment the user can compensate for misalignment by changing the relative alignment of the radar image and the target model. This may be achieved by dragging "handles" attached to the image to adjust position, rotation, scaling etc.

In one embodiment, automatic processing estimates the location of likely radar reflection centres in the 3D target model and performs a comparison with the radar image. For instance, likely areas of reflection may be identified in the 3D model and highlighted or otherwise displayed in the combined SAR image. This could assist in identifying hidden sources of radar reflection (e.g. sources of radar reflection which are not expected given the 3D model of the target).

In one embodiment, the target class of the target is identified through comparison of the 3D model or combined SAR image with a library of images, information derived from computer models of possible targets or otherwise. For instance, the target may be identified as a specific type of boat based on the 3D model having a similar shape to known boats.

In one embodiment, target characteristics, such as length, width and the position of prominent features (e.g. outboard engine) are automatically measured and/or estimated based on the 3D model or on the combined SAR image.

**Comparing SAR Image with 3D Model**

Discriminating between boats with and without a hidden cargo is not possible with current radar (or other systems). Embodiments of the present invention form high-resolution radar images and optically-derived 3D target models that can be compared directly. This makes interpreting the images much easier and improves the chances of successful discrimination.

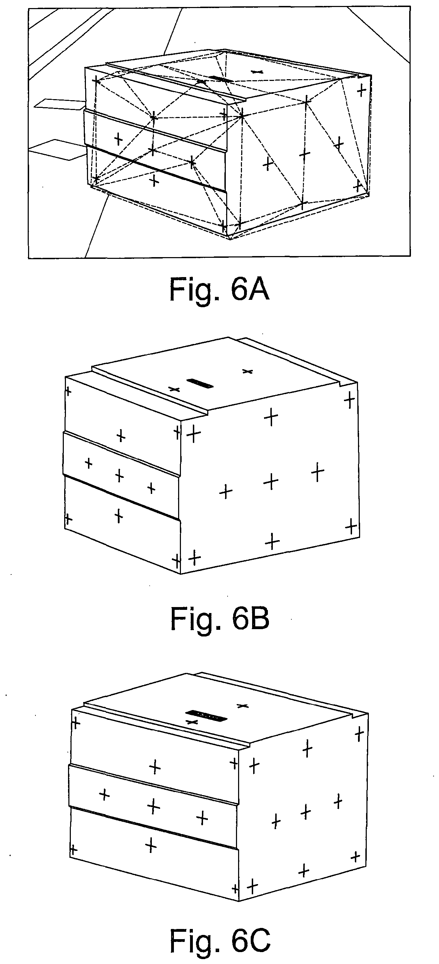

Figures 6A-6C show images of a shed with a 3D model of the shed overlaid. Figure 6A shows an image of the shed from a first direction. A 3D model of the shape of the shed is determined through structure from motion as discussed herein. This involves tracking the motion of sections of the object (in this case the shed) across a number of images taken from varying positions relative to the object. A 3D wire frame of the model (shown as dotted lines) is superimposed over the image based on the location of the tracked sections (the tracked features). In one embodiment, the wire frame is formed by connecting each of the tracked features to one or more nearby tracked features.

Figures 6B and 6C show a 3D reconstruction of the shed viewed from different angles. The reconstruction maps sections of the shed imagery onto sections of the 3D model. Accordingly, the shed is shown on its own, separated from the background shown in Figure 6A. In addition, rotating the reconstruction makes the shed appear to rotate as the sections of the image are transformed according to how they were mapped onto the model. By producing 3D reconstructions of objects being imaged, these reconstructions can be displayed to, and manipulated by, a user to assist the user in interpreting SAR images.

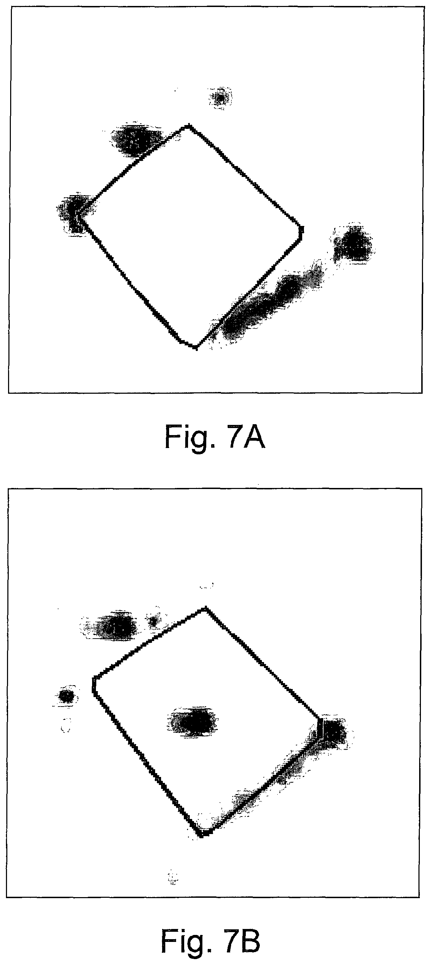

Figures 7A and 7B show video assisted ISAR (VAISAR) images of the shed of Figures 6A-6C with an outline of the 3D model overlaid. The outline of the shed, derived from 3D reconstruction, is shown as a black line. This allows a distinction to be made between reflections from the shed and objects inside the shed.

Figure 7A shows a VAISAR image of the shed whilst empty. An outline of the 3D model (black line) is superimposed onto the image which represents stronger radar signals in terms of darker areas. As the model and the image are in the same coordinate frame, the reflections shown in the SAR image should correspond to edges or surfaces of the model. This can be seen in Figure 7A where areas of increased radar signal (dark patches) correspond to the top left and bottom right edges of the projected model.

Figure 7B shows a VAISAR image of the shed when it contains a small reflector. Again, an outline of the 3D model (shown as a black line) is superimposed onto the image and the radar returns correspond to the top left and bottom right of the 3D model. In this case, however, there is also a strong radar reflection detected in the centre of the shed. This is within the outline of the 3D model, distant from the edges of the model. This corresponds to the reflector contained in the shed. Accordingly, the 3D model assists the user in identifying hidden objects within containers. This allows the user to determine remotely whether boats or other vehicles contain hidden cargo.

In one embodiment, a wire frame of the 3D model is superimposed over the object being imaged (the shed) in the SAR image. Alternatively, an outline of the 3D model may be superimposed over the object (as discussed in relation to Figures 7A and 7B). Any other type of representation of the model may be superimposed over the SAR image provided that it aids in the analysis of the image.

In addition or alternatively to superimposing the 3D model onto a SAR image, further embodiments display a representation of the 3D model alongside the SAR image to allow easy comparison. The 3D model may be a 3D representation of the object being imaged wherein sections of the images are mapped onto the surface of the 3D model. Alternatively, the 3D model may be a wire frame or other geometric representation of the shape of the object.

While certain embodiments have been described, the embodiments have been presented by way of example only, an area not intended to limit the scope of the inventions. Indeed, the novel methods and devices described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope of the inventions.

**Claims**

**1.** A method for producing a radar image, the method comprising:

(a) receiving (310) a set of optical images of an object to be imaged taken by an optical sensor from varying positions relative to the object;

(b) receiving (320) a sequence of radar measurements of the object taken by a radar sensor from varying positions relative to the object;

(c) determining the trajectory of the optical sensor relative to the object based on the optical images using structure from motion (350), wherein structure from motion (350) uses target feature tracks in combination with distance measurements from the sequence of radar measurements to estimate a structure of the object and the trajectory of the optical sensor relative to the object;

(d) determining the trajectory of the radar sensor relative to the object based on the relative positions of the radar sensor and optical sensor and based on the trajectory of the optical sensor; and

(e) forming (370) a synthetic aperture radar, hereinafter referred to as SAR, image of the object based on the radar measurements and the determined trajectory.

2. A method according to claim 1 further comprising determining a model of the shape of the object based on the optical images.

3. A method according to claim 2 further comprising, for each optical image, determining the distance from the optical sensor to the object based on the radar measurements, and wherein the determination of the model utilises the distances determined from the radar measurements to determine the absolute size of the model.

4. A method according to any of claims 2 or 3 wherein the SAR image is formed based on pixel positions determined based on the model of the object.

5. A method according to claim 4 wherein the pixel positions lie in a pixel plane, the pixel plane being the plane that that minimises the perpendicular extent of the object.

6. A method according to any of claims 2 to 5 further comprising superimposing a representation of the model onto the SAR image for comparison.

7. A method according to any preceding claim further comprising:

repeating steps (a) to (e) to form one or more additional SAR images based on one or more sets of additional optical images and one or more sets of additional radar measurements, the one or more additional SAR images being formed from synthetic apertures corresponding to one or more further trajectories of the radar sensor relative to the object, the trajectory and the one or more further trajectories combining to form an overall trajectory of the radar sensor relative to the object; and

forming a combined SAR image based on the SAR image and the one or more further SAR images.

8. A method according to claim 7 wherein forming the combined SAR image comprises:

transforming the one or more further SAR images to common pixel positions based on the determined further trajectories of the radar sensor; and

combining the transformed further SAR images to form the combined SAR image.

9. A method according to claim 8 when dependent on any of claims 4 to 7 wherein the pixel positions of the combined SAR image are determined based on the model of the object.

10. A method according to any of claims 7 to 9, when dependent on any of claims 4 to 8, further comprising superimposing a representation of the model onto the combined SAR image for comparison.

11. A device for producing a radar image, the device comprising a controller (220) configured to perform the method of any preceding claim.

**Patentansprüche**

1. Verfahren zum Erzeugen eines Radarabbildes, wobei das Verfahren Folgendes umfasst:

(a) Empfangen (310) eines Satzes optischer Abbilder eines Objekts, von dem ein Abbild zu erstellen ist, die von einem optischen Sensor aus verschiedenen Positionen relativ zu dem Objekt aufgenommen wurden;

(b) Empfangen (320) einer Folge von Radarmessungen des Objekts, die von einem Radarsensor aus verschiedenen Positionen relativ zu dem Objekt vorgenommen wurden;

(c) Bestimmen der Bewegungsbahn des optischen Sensors relativ zu dem Objekt basierend auf den optischen Abbildern unter Verwendung einer Struktur aus Bewegung (350), wobei die Struktur aus Bewegung (350) Zielmerkmalbahnen in Kombination mit Entfernungsmessungen aus der Folge von Radarmessungen verwendet, um eine Struktur des Objekts und die Bewegungsbahn des optischen Sensors relativ zu dem Objekt zu schätzen;

(d) Bestimmen der Bewegungsbahn des Radarsensors relativ zu dem Objekt basierend auf den relativen Positionen des Radarsensors und des optischen Sensors und basierend auf der Bewegungsbahn des optischen Sensors; und

(e) Bilden (370) eines Radar-Abbildes mit synthetischer Apertur, im Weiteren als SAR bezeichnet, des Objekts basierend auf den Radarmessungen und der bestimmten Bewegungsbahn.

2. Verfahren nach Anspruch 1, ferner das Bestimmen eines Modells der Form des Objekts basierend auf den optischen Abbildern umfassend.

3. Verfahren nach Anspruch 2, ferner das Bestimmen der Entfernung von dem optischen Sensor zu dem Objekt für jedes optische Abbild basierend auf den Radarmessungen umfassend, und wobei die Bestimmung des Modells die Entfernungen nutzt, die aus den Radarmessungen bestimmt wurden, um die absolute Größe des Modells zu bestimmen.

4. Verfahren nach einem der Ansprüche 2 oder 3, wobei das SAR-Abbild basierend auf Pixelpositionen gebildet wird, die basierend auf dem Modell des Objekts bestimmt werden.

5. Verfahren nach Anspruch 4, wobei die Pixelpositionen in einer Pixelebene liegen, wobei die Pixelebene die Ebene ist, die die senkrechte Erstreckung des Objekts minimiert.

6. Verfahren nach einem der Ansprüche 2 bis 5, ferner das Einblenden einer Darstellung des Modells auf dem SAR-Abbild zum Vergleich umfassend.

7. Verfahren nach einem der vorhergehenden Ansprüche, ferner Folgendes umfassend:

Wiederholen der Schritte (a) bis (e), um ein oder mehrere zusätzliche SAR-Abbilder basierend auf einem oder mehreren Sätzen zusätzlicher optischer Abbilder und einem oder mehreren Sätzen zusätzlicher Radarmessungen zu bilden, wobei das eine oder die mehreren zusätzlichen SAR-Abbilder aus synthetischen Aperturen gebildet werden, die einer oder mehreren weiteren Bewegungsbahnen des Radarsensors relativ zu dem Objekt entsprechen, wobei sich die Bewegungsbahn und die eine oder die mehreren weiteren Bewegungsbahnen kombinieren, um eine Gesamtbewegungsbahn des Radarsensors relativ zu dem Objekt zu bilden, und Bilden eines kombinierten SAR-Abbildes basierend auf dem SAR-Abbild und dem einen oder den mehreren weiteren SAR-Abbildern.

8. Verfahren nach Anspruch 7, wobei das Abbilden des kombinierten SAR-Abbildes Folgendes umfasst:

Umwandeln des einen oder der mehreren weiteren SAR-Abbilder zu gemeinsamen Pixelpositionen basierend auf den bestimmten weiteren Bewegungsbahnen des Radarsensors; und Kombinieren der umgewandelten weiteren SAR-Abbilder, um das kombinierte SAR-Abbild zu bilden.

9. Verfahren nach Anspruch 8, wenn abhängig von einem der Ansprüche 4 bis 7, wobei die Pixelpositionen des kombinierten SAR-Abbildes basierend auf dem Modell des Objekts bestimmt werden.

10. Verfahren nach einem der Ansprüche 7 bis 9, wenn abhängig von einem der Ansprüche 4 bis 8, ferner das Einblenden einer Darstellung des Modells auf dem kombinierten SAR-Abbild zum Vergleich umfassend.

11. Vorrichtung zum Erzeugen eines Radarabbildes, wobei die Vorrichtung eine Steuerung (220) umfasst, die dazu konfiguriert ist, das Verfahren nach einem der vorhergehenden Ansprüche durchzuführen.

**Revendications**

1. Procédé pour produire une image radar, le procédé comprenant les étapes consistant à :

(a) recevoir (310) un ensemble d'images optiques d'un objet à imager prises par un capteur optique à partir de différentes positions par rapport à l'objet ;
(b) recevoir (320) une séquence de mesures radar de l'objet prises par un capteur radar à partir de différentes positions par rapport à l'objet ;
(c) déterminer la trajectoire du capteur optique par rapport à l'objet sur la base des images optiques en utilisant une structure à partir du mouvement (350), dans lequel la structure à partir du mouvement (350) utilise des pistes de caractéristiques cible en combinaison avec des mesures de distance à partir de la séquence de mesures radar pour estimer une structure de l'objet et la trajectoire du capteur optique par rapport à l'objet ;
(d) déterminer la trajectoire du capteur radar par rapport à l'objet sur la base des positions relatives du capteur radar et du capteur optique et sur la base de la trajectoire du capteur optique ; et
(e) former (370) une image radar à ouverture synthétique, ci-après dénommée SAR, de l'objet sur la base des mesures radar et de la trajectoire déterminée.

2. Procédé selon la revendication 1, comprenant en outre la détermination d'un modèle de la forme de l'objet sur la base des images optiques.

3. Procédé selon la revendication 2, comprenant en outre, pour chaque image optique, la détermination de la distance entre le capteur optique et l'objet sur la base des mesures radar, et dans lequel la détermination du modèle utilise les distances déterminées à partir des mesures radar pour déterminer la taille absolue du modèle.

4. Procédé selon l'une quelconque des revendications 2 ou 3, dans lequel l'image SAR est formée sur la base des positions de pixels déterminées sur la base du modèle de l'objet.

5. Procédé selon la revendication 4, dans lequel les positions de pixels se trouvent dans un plan de pixels, le plan de pixels étant le plan qui minimise l'étendue perpendiculaire de l'objet.

6. Procédé selon l'une quelconque des revendications 2 à 5, comprenant en outre la superposition d'une représentation du modèle sur l'image SAR pour comparaison.

7. Procédé selon l'une quelconque des revendications précédentes, comprenant en outre les étapes consistant à :

répéter les étapes (a) à (e) pour former une ou plusieurs images SAR supplémentaires sur la base d'un ou plusieurs ensembles d'images optiques supplémentaires et d'un ou plusieurs ensembles de mesures radar supplémentaires, les une ou plusieurs images SAR supplémentaires étant formées à partir d'ouvertures synthétiques correspondant à une ou plusieurs trajectoires supplémentaires du capteur radar par rapport à l'objet, la trajectoire et les une ou plusieurs trajectoires supplémentaires se combinant pour former une trajectoire globale du capteur radar par rapport à l'objet ; et
former une image SAR combinée basée sur l'image SAR et les une ou plusieurs autres images SAR.

8. Procédé selon la revendication 7, dans lequel l'étape consistant à former l'image SAR combinée comprend les étapes consistant à :

transformer les une ou plusieurs autres images SAR en positions de pixels communes sur la base des autres trajectoires déterminées du capteur radar ; et
combiner les autres images SAR transformées pour former l'image SAR combinée.

9. Procédé selon la revendication 8 lorsqu'elle dépend de l'une quelconque des revendications 4 à 7, dans lequel les positions de pixels de l'image SAR combinée sont déterminées sur la base du modèle de l'objet.

10. Procédé selon l'une quelconque des revendications 7 à 9, lorsqu'elle dépend de l'une quelconque des revendications 4 à 8, comprenant en outre la superposition d'une représentation du modèle sur l'image SAR combinée pour comparaison.

11. Dispositif pour produire une image radar, le dispositif comprenant un contrôleur (220) configuré pour exécuter le procédé selon l'une quelconque des revendications précédentes.

Fig. 1

Fig. 2

Fig. 3

Receive positions of tracked
features determined from
camera data                     410

Represent positions as matrix P    420

Determine motion and
shape sub-matrices M and S    430

Determine trajectory of
camera and 3D model
of target                     440

400

Fig. 4

Set $t_0$ to be
start of data
collection ⟍ 510

Determine
aperture
duration ⟍ 520

530

Yes ◇ $\theta_0 >$ limit? No

Discard
aperture

540

Store
aperture

550

560

Output
aperture(s)

580

Yes ◇ End of
data set? No

Set new $t_0$
based on
overlap

570

500

## Fig. 5

Fig. 6A

Fig. 6B

Fig. 6C

Fig. 7A

Fig. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102010051207 A1

### Non-patent literature cited in the description

- **ANDREY ZHURAVLEV et al.** *Inverse synthetic aperture radar imaging for concealed object detection on a naturally walking person*
- **ANDREY ZHURAVLEV et al.** *ISAR for concealed objects imaging*
- **HARRIS, C. ; STEPHENS, M.** A combined corner and edge detector. *In 4th Alvey Vision Conference,* 1988, 147-151
- **LOWE, D.** Distinctive image features from scale-invariant keypoints. *Int. J. Comput. Vision,* 2004, vol. 60 (2), 91-110
- **C. TOMASI ; T. KANADE.** Shape and motion from image streams under orthography: a factorization method. *International Journal of Computer Vision,* 1992, vol. 9 (2), 137-154
- **CONRAD J. POELMAN ; TAKEO KANADE.** A Paraperspective Factorization Method for Shape and Motion Recovery. *IEEE Transactions on Pattern Analysis and Machine Intelligence,* March 1997, vol. 19 (3), 206-218
- **W. G. CARRARA ; R. S. GOODMAN ; R. M. MAJEWSKI.** Spotlight Synthetic Aperture Radar: Signal Processing Algorithms. Artech House, 1995